# EUROPÄISCHE PATENTSCHRIFT

(11) **EP 4 378 610 B1**
(45) Veröffentlichungstag und Bekanntmachung des Hinweises auf die Patenterteilung: **24.06.2026**
(21) Anmeldenummer: 23211046.0
(22) Anmeldetag: 21.11.2023
(51) Int. Cl.: B23D 59/00, B27B 5/065

(54) **VERFAHREN ZUM AUFTEILEN EINES ERSTEN WERKSTÜCKS IN ZWEITE WERKSTÜCKE, SOWIE VERFAHREN ZUM BEREITSTELLEN EINER GRÖSSE, DIE EINE ZU ERWARTENDE MASSABWEICHUNG AN EINEM AUS DEM ERSTEN WERKSTÜCK HERZUSTELLENDEN ZWEITEN WERKSTÜCK CHARAKTERISIERT**
METHOD OF DIVIDING A FIRST WORKPIECE INTO SECOND WORKPIECES AND METHOD OF PROVIDING AN ANTICIPATED DIMENSIONAL DEVIATION TO A SECOND WORKPIECE
PROCÉDÉ DE RÉPARTITION D'UNE PREMIÈRE PIÈCE DANS DEUX PIÈCES, ET PROCÉDÉ DE FOURNITURE D'UNE GRANDEUR CARACTÉRISANT UNE DÉVIATION DIMENSIONNELLE ATTENDUE D'UNE PREMIÈRE PIÈCE

(30) Priorität: 01.12.2022 DE 102022131888
(43) Veröffentlichungstag der Anmeldung: 05.06.2024
(73) Patentinhaber: HOMAG Plattenaufteiltechnik GmbH, 75365 Calw (DE)
(72) Erfinder: Müller, Roland, 72218 Wildberg (DE); Hoffmann, Dirk, 75365 Calw (DE); Bacher, Markus, 72218 Wildberg (DE); Martynenko, Sergey, 71083 Herrenberg (DE); Wirth, Sven, 71263 Weil der Stadt (DE)
(74) Vertreter: DREISS Patentanwälte PartG mbB

(56) Entgegenhaltungen:
- EP-A1- 3 208 020
- DE-A1- 102021 109 519

## Beschreibung

Die Erfindung betrifft ein Verfahren zum Aufteilen eines ersten Werkstücks in zweite Werkstücke sowie ein Verfahren zum Bereitstellen einer Größe, die eine zu erwartende Abweichung mindestens eines Istmaßes eines aus dem ersten Werkstück herzustellenden zweiten Werkstücks von einem entsprechenden Sollmaß (Maßabweichung) charakterisiert, nach den Oberbegriffen der nebengeordneten Ansprüche.

Die DE 10 2018 110 942 A1 beschreibt ein Verfahren zum Betreiben einer Werkstückaufteilanlage, nämlich einer Plattenaufteilsäge, mit der ein erstes Werkstück in zweite Werkstücke aufgeteilt wird, bei dem mittels einer Sensoreinrichtung eine geometrische Eigenschaft eines zweiten Werkstücks ermittelt wird. Somit kann an dem zweiten Werkstück die Qualität beurteilt werden, und es kann unmittelbar nach der Aufteilung eine Aussage darüber getroffen werden, ob das hergestellte zweite Werkstück eine gewünschte Qualitätsanforderung erfüllt oder ob eine Nachbearbeitung erforderlich ist oder sogar eine Nachproduktion eines neuen Werkstücks mit dem Ziel, dass dieses dann die gewünschten Qualitätsanforderungen erfüllt.

Dem liegt zugrunde, dass beispielsweise bei Spanplatten als ersten Werkstücken während und nach deren Herstellung durch die Abkühlung und Trocknung innere mechanische Spannungen bzw. Materialspannungen entstehen können. Diese können später dazu führen, dass sich ein aus dem ersten Werkstück hergestelltes zweites Werkstück nach dessen Herstellung verzieht und somit die Istmaße nicht mehr innerhalb des Toleranzbereiches der vorgesehenen Sollmaße liegen. Beispielsweise können hergestellte zweite Werkstücke anstelle einer gewünschten exakten Rechteckform eine sogenannte gekrümmte "Bananenform" aufweisen.

Zweite Werkstücke sind insbesondere streifenförmige Werkstücke, die von einer Ausgangsplatte bei einem Erstschnitt abgetrennt werden, oder rechteckförmige Werkstücke, die von den streifenförmigen Werkstücken bei einem Zweitschnitt abgetrennt werden. Weitere innere mechanische Spannungen können auch durch eine Lagerung der abgekühlten und getrockneten Ausgangswerkstücke bei hoher Luftfeuchtigkeit entstehen, wenn die Werkstücke lokal eine unterschiedliche Feuchtigkeit aufnehmen. Insbesondere wird mehr Feuchtigkeit in einem Randbereich der Werkstücke im Vergleich zu einem mittleren Bereich der Werkstücke aufgenommen.

Die EP 3 208 020 A1 offenbart ein Verfahren zum Beschneiden und Vermessen einer Platte, bei dem die gemessenen Daten für die Abmessungen der letzten Platte genutzt werden, um für eine der folgenden Platten die Ausrichtung der Säge so einzustellen, dass das Ergebnis verbessert wird. Die DE 10 2021 109519 A1 offenbart den Oberbegriff des Hauptanspruches.

Ausgehend hiervon hat die vorliegende Erfindung die Aufgabe, ein Verfahren zum Aufteilen eines ersten Werkstücks in zweite Werkstücke anzugeben, bei dem die Notwendigkeit einer Nachbearbeitung oder einer Nachproduktion reduziert wird.

Diese Aufgabe wird durch die in den nebengeordneten Ansprüchen angegebenen Verfahren gelöst, sowie durch die in nebengeordneten Ansprüchen angegebene Steuer- und/oder Regeleinrichtung und Werkstückaufteilanlage. Vorteilhafte Weiterbildungen sind in Unteransprüchen angegeben.

Das erfindungsgemäße Verfahren zum Aufteilen hat als einen Vorteil, dass nicht erst nach der Aufteilung, sondern bereits im Vorfeld vor einer Aufteilung Maßnahmen ergriffen werden können, die von mindestens einer Größe, die eine zu erwartende Abweichung mindestens eines Istmaßes eines zweiten Werkstücks von einem entsprechenden Sollmaß ("Maßabweichung") charakterisiert, abhängen, wobei die zu erwartende Maßabweichung unter der Annahme einer bestimmten Verwendung (beispielsweise unter Verwendung eines bestimmten Aufteilplans) des ersten Werkstücks bei der Aufteilung bereitgestellt wird. Diese Maßnahmen können ganz allgemein die Verwendung des ersten Werkstücks sowohl für die Aufteilung als auch bei bzw. während der Aufteilung betreffen. Ebenso können diese Maßnahmen eine Aussonderung des ersten Werkstücks noch vor der Aufteilung betreffen. Somit können gezielt Maßnahmen ergriffen werden, die dazu führen, dass die nach der Aufteilung vorhandenen bzw. durch die Aufteilung entstandenen zweiten Werkstücke gewünschte Qualitätsanforderungen bestmöglich erfüllen. Die Notwendigkeit einer Nachbearbeitung an diesen zweiten Werkstücken, oder sogar die Notwendigkeit der Nachproduktion von solchen zweiten Werkstücken wegen Nichterfüllung der Qualitätsanforderungen wird somit reduziert.

Dabei versteht es sich, dass unter einer Größe, die eine zu erwartende Abweichung mindestens eines Istmaßes des zweiten Werkstücks von einem entsprechenden Sollmaß charakterisiert, auch ein Größenbereich verstanden werden kann oder eine nur qualitative Größe beispielsweise im Sinne von "hoch", "mittel" oder "niedrig". Typischerweise werden durch die erwartete Abweichung des Istmaßes vom entsprechenden Sollmaß an dem zweiten Werkstück in dem ersten Werkstück vor der Aufteilung vorhandene innere mechanische Spannungen charakterisiert.

Durchgeführt wird das erfindungsgemäße Verfahren typischerweise auf einer Werkstückaufteilanlage. Infrage kommt typischerweise eine Plattenaufteilanlage, und diese ist wiederum typischerweise eine Plattenaufteilsäge, wie sie zur Herstellung von plattenförmigen zweiten Werkstücken beispielsweise für die Möbelindustrie verwendet wird. Bei den Werkstücken kann es sich typischerweise um Spanplatten oder MDF-Platten handeln. Die ersten Werkstücke können großformatige plattenförmige Werkstücke mit Längenabmessungen von beispielsweise 2 m x 3 m sein.

Die Bereitstellung der Größe, die die erwartete Abweichung des Istmaßes des zweiten Werkstücks von dem entsprechenden Sollmaß charakterisiert, erfolgt bevorzugt automatisch in Form eines Datensatzes. Erzeugt werden kann der Datensatz beispielsweise dadurch, dass ein erstes Werkstück in eine Mehrzahl zweiter Werkstücke durch Längsschnitte (in der Regel auch als Erstschnitte bezeichnet) oder zusätzlich durch Querschnitte (in der Regel auch als Zweitschnitte bezeichnet) aufgeteilt wird, dann mindestens ein Istmaß mindestens eines zweiten Werkstücks erfasst wird, dieses Istmaß mit einem entsprechenden Sollmaß verglichen wird, und auf der Basis dieses Vergleichs dann auf die Größe geschlossen wird, die bei nachfolgenden Aufteilungen zu erwartende Abweichungen zwischen Istmaß und Sollmaß am zweiten Werkstück charakterisiert. Dabei kann im einfachsten Fall davon ausgegangen werden, dass bei einer geringen Differenz zwischen Sollmaß und Istmaß am zweiten Werkstück nur geringe innere mechanische Spannungen im ersten Werkstück vorliegen, wohingegen bei einer großen Differenz zwischen Sollmaß und Istmaß eher große innere mechanische Spannungen vorliegen. Weiterhin kann diese Größe ein Kennwert sein, welcher von gemessenen geometrischen Abweichungen des zweiten Werkstücks abgeleitet wurde.

Die auf diese Weise erstellten Datensätze können beispielsweise und gegebenenfalls zusätzlich folgende Informationen enthalten: Maß- und Winkelabweichungen des zweiten Werkstücks, Markierung einer konkaven bzw. konvexen Seite, Materialeigenschaften, Position des zweiten Werkstücks in einem Aufteilplan, Prozessparameter der Aufteilung, ein Code für eine Identifikation des ersten oder des zweiten Werkstücks, eine gemessene Krümmung eines Bereichs des zweiten Werkstücks, eine Drehung des zweiten Werkstücks durch einen Roboter nach der Aufteilung, sonstige Messwerte von bei der Messung verwendeten Sensoren, Qualitätsmerkmale anhand eingestellter Toleranzen. Eine Mehrheit von solchen Datensätzen kann eine Datenbank bilden. Die besagten Daten können bei einer Prozessparameteranpassung, Maschineneinstellung und bei zukünftigen Aufteilplanoptimierungen verwendet werden.

Weiterhin kann diese Information an nachfolgende Bearbeitungen als Datensatz für das jeweilige erste und/oder zweite Werkstück oder auch auf einem Etikett weitergegeben werden. Möglich ist auch, dass an einer Aufteilanlage nach dem Messen einer Krümmung an einem zweiten Werkstück eine entsprechende Information auf einem Bildschirm und/oder per Lichtsignal angezeigt wird. Es kann dann von einer Steuer- und/oder Regeleinrichtung entschieden werden, ob die geplante Aufteilung durchgeführt wird, die Messung wiederholt wird oder diese übersprungen und die enthaltenen Teile zur Nachproduktion markiert werden sollen.

Es kann ferner festgelegt werden, ob das gekrümmte zweite Werkstück als Abfall oder als noch zu verwendendes Reststück deklariert werden soll. Dabei können Toleranzwerte für Werkstücke in mehreren Stufen jeweils für ein bestimmtes Material oder für alle Materialien festgelegt werden, z.B. um zu erkennen, ab wann eine erfasste Krümmung für nachfolgende Bearbeitungen relevant ist und ab wann eine erfasste Krümmung zu Werkstücken führt, die außerhalb der gewünschten Toleranzen liegen.

Erfindungsgemäß wird ein Aufteilplan, gemäß dem das erste Werkstück aufgeteilt werden soll, abhängig von der bereitgestellten Größe überprüft und ggf. angepasst, also beispielsweise werden zweite Werkstücke im Aufteilplan des ersten Werkstücks umplatziert. Dies ist eine effiziente und einfach zu realisierende Maßnahme. Insbesondere ist es möglich, die Überprüfung bzw. Anpassung des Aufteilplans automatisch durch einen entsprechenden Optimierungsalgorithmus durchzuführen, der als zusätzliches oder neues Optimierungskriterium die beispielsweise aufgrund der inneren Spannungen im ersten Werkstück zu erwartenden Verformungen bzw. Maßabweichungen an den zweiten Werkstücken oder äquivalente Größen oder Werte hat.

Der Aufteilplan, gemäß dem das erste Werkstück in zweite Werkstücke aufgeteilt wird, kann somit in Abhängigkeit beispielsweise von den vorhersehbaren und durch die Verformungen bedingten Maß- und Winkelfehlern sowie beispielsweise in Abhängigkeit von Qualitätsanforderungen an die zweiten Werkstücke optimiert werden. Aus den zu dem ersten Werkstück vorliegenden Daten kann letztlich die zu erwartende Maßabweichung des zweiten Werkstücks in Abhängigkeit von seiner Form, seiner Position im Aufteilplan und einem Werkstoff des ersten Werkstücks (und somit auch des zweiten Werkstücks) vorhergesagt werden.

Beispielsweise können vorab die zweiten Werkstücke nach werkstückspezifischen Qualitätsanforderungen eingestuft werden. Die Stufen der Qualitätsanforderungen werden je nach vorgesehener Verwendung der zweiten Werkstücke definiert. Beispielsweise bei Möbelstücken haben Seitenwände einen höheren Qualitätsanspruch in Bezug auf Formgenauigkeit als Einlegeböden. Somit wären die Qualitätsanforderungen für zweite Werkstücke, welche Seitenwände bilden sollen oder aus denen Seitenwände hergestellt werden sollen, höher als für zweite Werkstücke, welche Einlegeböden bilden sollen oder aus denen Einlegeböden hergestellt werden sollen. Hierbei können für die Einteilung der Stufen der Qualitätsanforderungen beispielsweise maximal zulässige Maß- und Winkelfehler sowie eine maximal zulässige Krümmung eines Seitenrands als Kennzahl bzw. als Kennzahlen herangezogen werden. Durch die Einteilung in unterschiedliche Stufen von Qualitätsanforderungen können höhere Toleranzfelder zugelassen werden und hiermit Nachbearbeitungen vermieden werden.

Gemäß dem überprüften bzw. angepassten Aufteilplan wird ein zweites Werkstück mit einer ersten Qualitätsanforderung aus einem ersten Bereich des ersten Werkstück und ein zweites Werkstück mit einer zweiten Qualitätsanforderung aus einem zweiten Bereich des ersten Werkstücks hergestellt, wobei die erste Qualitätsanforderung geringer ist als die zweite Qualitätsanforderung, und wobei bei einem aus dem ersten Bereich hergestellten zweiten Werkstück eine größere Abweichung des Istmaßes vom entsprechenden Sollmaß erwartet wird als bei einem aus dem zweiten Bereich hergestellten zweiten Werkstück (was häufig bedeutet, dass in dem ersten Bereich eine größere innere mechanische Spannung angenommen werden kann als in dem zweiten Bereich). Ein Werkstück mit einer eher hohen Qualitätsanforderung (beispielsweise eine Seitenwand eines Möbelstücks) wird dann im Aufteilplan beispielsweise eher in dem zweiten Bereich angeordnet, in dem beispielsweise eine vergleichsweise geringe innere mechanische Spannung vorliegt, beispielsweise in der Mitte eines plattenförmigen ersten Werkstücks.

Dabei kann auch auf gesammelte Daten aus der Vergangenheit zurückgegriffen werden, die bei der Optimierung früherer Aufteilpläne entstanden sind. Bei dieser Weiterbildung wird also die Bearbeitungsqualität der zweiten Werkstücke durch eine Optimierung des Aufteilplans unter Berücksichtigung der ermittelten bzw. prognostizierten/angenommenen Maßabweichungen am zweiten Werkstück (und/oder hieraus abgeleiteten inneren mechanischen Spannungen im ersten Werkstück) verbessert. Ferner kommt es weniger oft zu einer Überschreitung der Fertigungstoleranzen bei den hergestellten zweiten Werkstücken, weil im Aufteilplan zweite Werkstücke mit geringeren Qualitätsanforderungen in jene Bereiche des ersten Werkstücks verlegt werden, in denen höhere innere mechanische Spannungen angenommen werden. Insgesamt wird auch die Ausnutzung des für die Bearbeitung zur Verfügung gestellten Materials verbessert und die Menge an Ausschuss reduziert.

Bei einer Weiterbildung hierzu ist vorgesehen, dass der Aufteilplan abhängig von der bereitgestellten Größe derart angepasst wird, dass der Aufteilplan mindestens einen - gegebenenfalls zusätzlich zu einem bereits vorhandenen - Spannungsfreischnitt enthält. Dies kann alternativ oder zusätzlich zu der obigen Maßnahme der Umplatzierung von zweiten Werkstücken im Aufteilplan des ersten Werkstücks erfolgen beispielsweise dann, wenn zu erwarten ist, dass durch die Umplatzierung der zweiten Werkstücke im Aufteilplan des ersten Werkstücks die Qualitätsanforderungen an die zweiten Werkstücke dennoch nicht alle eingehalten werden können.

Ist der Spannungsfreischnitt zusätzlich, dann kann es sein, dass nicht mehr alle ursprünglich im Aufteilplan enthaltenen zweiten Werkstücke aus dem ersten Werkstück hergestellt werden können. In diesem Fall müssen dann auch nachfolgende Aufteilpläne abgeändert werden, die dann das in dem besagten Aufteilplan ursprünglich enthaltene und dann "herausgefallene" zweite Werkstück enthalten.

Bei einer Weiterbildung ist vorgesehen, dass abhängig von der bereitgestellten Größe und/oder abhängig von einer Qualitätsanforderung an das zweite Werkstück ein alternatives erstes Werkstück mit einem anderen Wert der Größe ausgewählt wird, welche die zu erwartende Abweichung zwischen Istmaß und Sollmaß am zweiten Werkstück charakterisiert. Das erste Werkstück wird also ausgesondert. Beispielsweise kann vorab festgestellt werden, dass mit dem zunächst zur Verfügung gestellten ersten Werkstück (beispielsweise aufgrund dort vorhandener innerer mechanischer Spannungen) auch nach einer Umplatzierung der zweiten Werkstücke im Aufteilplan diese nicht mit der gewünschten Qualität hergestellt werden können. In diesem Fall kann als alternatives erstes Werkstück ein solches ausgewählt werden, bei dem nach der Aufteilung am zweiten Werkstück eine insgesamt bessere Maßhaltigkeit bzw. geringere Verformungen erwartet werden können. Oder, mit anderen Worten: zweite Werkstücke mit hohen Qualitätsanforderungen werden erfindungsgemäß vorzugsweise aus vergleichsweise spannungsarmen ersten Werkstücken hergestellt.

Bei einer Weiterbildung ist vorgesehen, dass die bereitgestellte Größe abhängig von mindestens einem Parameter aus der folgenden Gruppe ermittelt wird: Temperatur des ersten Werkstücks während der Lagerung (Lagertemperatur); Luftfeuchtigkeit der Umgebung des ersten Werkstücks während der Lagerung (Lagerfeuchtigkeit); Dauer der Lagerung des ersten Werkstücks (Lagerdauer); Art der Lagerung des ersten Werkstücks (Lagerart, beispielsweise in einer Halle oder im Freien, oder vertikal oder senkrecht); Lagerplatz bei der Lagerung des ersten Werkstücks; Materialart des ersten Werkstücks; Hersteller des ersten Werkstücks; Materialdichte des ersten Werkstücks; Materialdicke des ersten Werkstücks. Hierdurch wird berücksichtigt, dass bei Aufteilanlagen, insbesondere bei Plattenaufteilanlagen für die Möbelherstellung, die ersten Werkstücke oft automatisch aus einem Bereitstellungslager bereitgestellt werden. Zu den bereitgestellten ersten Werkstücken können dabei Datensätze existieren bzw. erstellt werden, die einen oder mehrere der oben genannten Parameter enthalten.

Diese Parameter zeichnen sich dadurch aus, dass sie die in den ersten Werkstücken zunächst unmittelbar nach deren Herstellung vorhandenen inneren mechanischen Spannungen beeinflussen können. Die Zusammenhänge zwischen den oben genannten Parametern und den nach einer Aufteilung an den zweiten Werkstücken zu erwartenden Verformungen bzw. Abweichungen zwischen Istmaßen und Sollmaßen können dabei beispielsweise mittels Versuchen vorab empirisch ermittelt werden. Besonders bevorzugte Parameter sind Lagerdauer, Lagertemperatur und Lagerfeuchtigkeit. Letztlich wird durch diese Weiterbildung die Genauigkeit der Vorhersage der Größe, die die zu erwartende Abweichung zwischen einem Istmaß und einem Sollmaß am zweiten Werkstück charakterisiert, verbessert, wodurch insgesamt die Genauigkeit des erfindungsgemäßen Verfahrens verbessert wird.

Bei einer Weiterbildung hierzu ist vorgesehen, dass ein erstes Werkstück nur dann für die Aufteilung verwendet wird, wenn eine Dauer der Lagerung des ersten Werkstücks einen Grenzwert mindestens erreicht hat. Hierdurch wird der Tatsache Rechnung getragen, dass im Verlaufe einer Lagerung eines Werkstücks insbesondere unter bestimmten Umweltbedingungen in dem ersten Werkstück vorhandene innere mechanische Spannungen abgebaut werden. Für die Herstellung von zweiten Werkstücken mit hohen Qualitätsanforderungen kann es daher sinnvoll sein, nur solche erste Werkstücke zu verwenden, die zuvor vergleichsweise lange gelagert wurden.

Bei einer Weiterbildung ist vorgesehen, dass die bereitgestellte Größe bei mindestens einem vorangegangenen Aufteilprozess ermittelt und insbesondere in einer Datenbank gespeichert wurde und eine ist aus der folgenden Gruppe: Parameter für die Größe der inneren mechanischen Spannung; insbesondere eine Größe der Abweichung des Istmaßes von einem Sollmaß; Lage eines Bereichs innerhalb des ersten Werkstücks mit einer erwarteten Abweichung des Istmaßes von einem Sollmaß beim zweiten Werkstück, die in einem vorbestimmten Größenbereich liegt, also Lage des zweiten Werkstücks in einer horizontalen Ebene innerhalb des ersten Werkstücks, beispielsweise Randlage oder zentrale Lage innerhalb des ersten Werkstücks. Wie oben bereits erwähnt, kann die Größe sowohl numerisch in Form eines absoluten Werts oder als ein Bereich oder auch qualitativ ausgedrückt werden. Hierdurch wird die Ausführung des erfindungsgemäßen Verfahrens vereinfacht.

Möglich ist, dass bei dem Verfahren aus den erfassten Abweichungen der Istmaße gegenüber den Sollmaßen eines zweiten Werkstücks solche Größen ermittelt werden, die innere mechanische Spannungen von einzelnen Bereichen des ersten Werkstücks charakterisieren. Es können somit beispielsweise Kennwerte für die inneren mechanischen Spannungen der einzelnen Bereiche des ersten Werkstücks errechnet werden. Diese Kennwerte können Qualitätsstufen, Abweichungen von den Sollmaßen, Art der Verformung, etc. enthalten.

Bei einer Weiterbildung ist vorgesehen, dass dann, wenn für das erste Werkstück keine Größe, die eine zu erwartende Abweichung mindestens eines Istmaßes des zweiten Werkstücks von einem entsprechenden Sollmaß charakterisiert, bereitgestellt werden kann (beispielsweise weil die entsprechenden Daten schlichtweg nicht vorliegen), ein Aufteilplan derart angepasst wird, dass größere Anschnittmaße berücksichtigt werden. Dies gestattet es, dann, wenn beispielsweise während der Aufteilung Verformungen an hergestellten zweiten Werkstücken erkannt werden, dynamisch an bestimmten Stellen Spannungsfreischnitte in den Aufteilplan aufzunehmen, ohne dass hierdurch die Ausführung des an sich vorgesehenen Aufteilplans verunmöglicht wird.

Größere Anschnittmaße können auch bedeuten, dass letztlich aus den Randbereichen des ersten Werkstücks keine zweiten Werkstücke hergestellt werden, denn typischerweise sind die inneren Spannungen in den Randbereichen eines plattenförmigen Werkstücks größer als in dessen mittlerem Bereich, und folglich wären bei zweiten Werkstücken, die aus solchen Randbereichen hergestellt werden, vergleichsweise große Abweichungen von Istmaßen zu entsprechenden Sollmaßen zu erwarten.

Ein Verfahren zum Bereitstellen der Größe, die eine zu erwartende Abweichung mindestens eines Istmaßes eines aus einem ersten Werkstück herzustellenden zweiten Werkstücks von einem entsprechenden Sollmaß charakterisiert, umfasst die folgenden Schritte: Aufteilen eines ersten Werkstücks in eine Mehrzahl zweiter Werkstücke; Erfassen mindestens eines Istmaßes mindestens eines der zweiten Werkstücke; Vergleichen des Istmaßes mit einem entsprechenden Sollmaß; auf der Basis des Vergleichs: Ermitteln einer Größe, die eine zu erwartende Abweichung des Istmaßes von einem entsprechenden Sollmaß bei einem zweiten Werkstück charakterisiert, welches zweite Werkstück aus dem gleichen Bereich des ersten Werkstücks hergestellt werden soll.

Bei einer Weiterbildung hierzu ist vorgesehen, dass die ermittelte Größe auch für andere erste Werkstücke einer selben Charge verwendet wird. Mit dem Begriff "Charge" ist hier beispielsweise eine Produktionscharge von großformatigen plattenförmigen ersten Werkstücken gemeint. Hierdurch wird berücksichtigt, dass bei der Herstellung beispielsweise von großformatigen plattenförmigen Werkstücken für die Möbelindustrie, beispielsweise großformatigen Spanplatten, in einer Charge die gleichen Herstellungsbedingungen und gleichen äußeren Einflüsse wie Lager- und Abkühlbedingungen vorliegen und daher davon ausgegangen werden kann, dass auch gleiche oder zumindest sehr ähnliche innere mechanische Spannungen mit gleicher örtlicher Verteilung in diesen ersten Werkstücken und somit gleiche oder zumindest ähnliche zu erwartende Maßabweichungen an hieraus hergestellten zweiten Werkstücken vorliegen.

Bei einer Weiterbildung hierzu ist vorgesehen, dass die ermittelte Größe einer vorab bestimmten Qualitätsklasse des ersten Werkstücks bzw. der ersten Werkstücke zugeordnet wird, also die Qualitätsklasse des ersten Werkstücks durch die Zuordnung beeinflusst wird. Dies erleichtert die Ausführung des obigen Verfahrens zum Aufteilen, da bei einer automatischen Ausführung weniger Rechenoperationen für die Zuordnung zweiter Werkstücke mit den ihnen zugeordneten Qualitätsanforderungen zu entsprechend möglichen ersten Werkstücken erforderlich sind.

Die Erfindung betrifft auch eine Steuer- und/oder Regeleinrichtung, umfassend mindestens einen Speicher und mindestens einen Prozessor, welche Mittel zur Ausführung eines der Verfahren der obigen Art umfasst, und eine Werkstückaufteilanlage umfassend eine solche Steuer-und/oder Regeleinrichtung. Hierdurch wird der Tatsache Rechnung getragen, dass es besonders vorteilhaft ist, die obigen Verfahren, insbesondere die oben genannten Verfahren zum Aufteilen, mindestens zum Teil, vorzugsweise jedoch weitgehend oder vollständig automatisiert durchzuführen. Beispielsweise bei der Überprüfung bzw. Anpassung eines Aufteilplans kann dabei ein mit entsprechenden Trainingsdaten trainierter Algorithmus einer Künstlichen Intelligenz zum Einsatz kommen. Dabei kann die erfindungsgemäße Steuer- und/oder Regeleinrichtung mindestens ein Computersystem umfassen oder aus einem solchen bestehen.

Nachfolgend wird eine Ausführungsform der Erfindung unter Bezugnahme auf die beigefügte Zeichnung erläutert. In der Zeichnung zeigen:
Figur 1 eine Draufsicht auf eine Plattenaufteilanlage in Form einer Plattenaufteilsäge zum Aufteilen plattenförmiger erster Werkstücke in zweite Werkstücke;
Figur 2 eine Draufsicht auf zwei durch die Aufteilung eines ersten Werkstücks mittels der Plattenaufteilanlage von Figur 1 bananenförmig gewordenen zweiten Werkstücken;
Figur 3 eine Draufsicht auf ein weiteres durch die Aufteilung eines ersten Werkstücks mittels der Plattenaufteilanlage von Figur 1 hergestelltes zweites Werkstück;
Figur 4 ein Flussdiagramm eines möglichen Verfahrens zum Bereitstellen einer Größe, die unter der Annahme einer bestimmten Verwendung des ersten Werkstücks bei der Aufteilung eine zu erwartende Abweichung mindestens eines Istmaßes eines zweiten Werkstücks von einem entsprechenden Sollmaß charakterisiert; und
Figur 5 ein Flussdiagramm eines möglichen Verfahrens zum Aufteilen eines ersten Werkstücks in zweite Werkstücke mittels der Plattenaufteilanlage von Figur 1 und unter Verwendung der gemäß Figur 4 bereitgestellten Größe.

Nachfolgend tragen funktionsäquivalente Elemente und Bereiche in unterschiedlichen Figuren die gleichen Bezugszeichen.

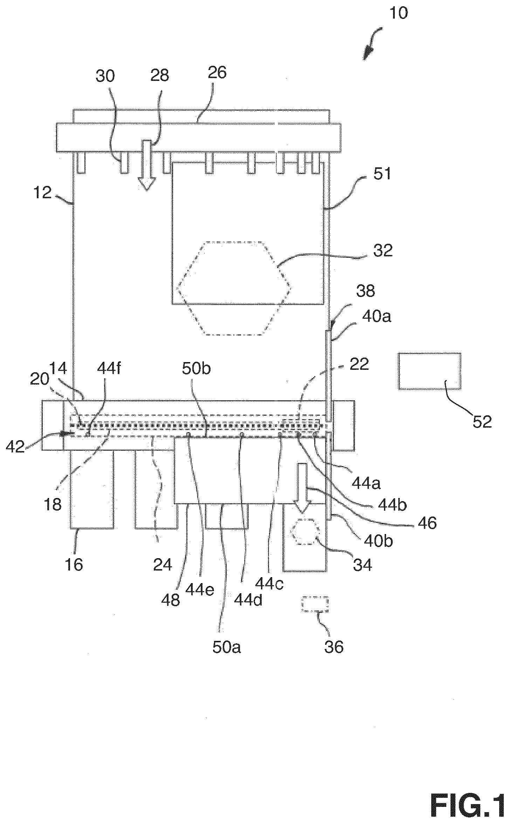

Fig. 1 zeigt eine Werkstückaufteilanlage 10 in Form einer Plattenaufteilsäge. Sie umfasst vorliegend beispielhaft einen Zuführtisch 12, der vorliegend beispielhaft aus einer Mehrzahl von Rollenbahnen gebildet ist, einen sich an den Zuführtisch 12 anschließenden Maschinentisch 14 und einen sich an den Maschinentisch 14 anschließenden Entnahmetisch 16. Letzterer ist vorliegend beispielhaft als Luftkissentisch ausgebildet und besteht vorliegend beispielhaft aus vier Segmenten, von denen aus Gründen der Einfachheit nur eines mit einem Bezugszeichen versehen ist.

Die Aufteilung eines Werkstücks erfolgt im Bereich des Maschinentisches 14, in dem hierfür ein Sägeschlitz 18 vorhanden ist, der längs einer punktiert dargestellten Sägelinie 20 verläuft. Unterhalb von dem Sägeschlitz 18 ist ein längs zur Sägelinie 20 verfahrbarer Sägewagen 22 vorhanden, der vorliegend beispielhaft zwei Sägeblätter (nicht gezeichnet) einer Hauptsäge und einer Vorritzsäge trägt. Oberhalb von der Sägelinie 20 ist ein gestrichelt gezeichneter Druckbalken 24 vorhanden, der während einer Bearbeitung eines Werkstücks auf dieses abgesenkt werden kann.

Zu der Werkstückaufteilanlage 10 gehört ferner eine Fördereinrichtung vorliegend beispielhaft in Form eines portalartigen Programmschiebers 26, der motorisch in einer durch einen Pfeil 28 dargestellten Förderrichtung und zurück bewegt werden kann und der eine Mehrzahl von Spannzangen 30 trägt, von denen in Fig. 1 aus Gründen der Übersichtlichkeit nur eine mit einem Bezugszeichen bezeichnet ist.

In einer bevorzugten und daher hier lediglich beispielhaft dargestellten Ausführungsform umfasst die Werkstückaufteilanlage 10 noch eine Handhabungseinrichtung 32, die vorliegend nur symbolisch durch ein strichpunktiert gezeichnetes Sechseck dargestellt ist und die beispielsweise eine Kombination aus einem Roboter mit einer Saugtraverse umfassen kann. Durch eine solche Handhabungseinrichtung 32, und/oder - nicht dargestellt - eine Handhabungseinrichtung eines Bereitstellunglagers, können Werkstücke auf den Zuführtisch 12 aufgelegt oder von diesem entnommen oder auf dem Zuführtisch 12 beispielsweise um 90° gedreht werden, und/oder es können Werkstücke auf den Entnahmetisch 16 aufgelegt und von diesem entnommen oder auf dem Entnahmetisch 16 beispielsweise um 90° gedreht werden.

In einer weiteren bevorzugten und daher hier lediglich beispielhaft dargestellten Ausführungsform umfasst die Werkstückaufteilanlage 10 im Bereich des Entnahmetisches 16 ist ferner eine Etikettiereinrichtung 34 vorhanden. In einer besonders bevorzugten Ausführungsform umfasst die Werkstückaufteilanlage 10 ferner bevorzugt im Bereich des Entnahmetisches 16 noch eine Anzeigeeinrichtung 36. Zu der Werkstückaufteilanlage 10 gehört bevorzugt eine seitlich von den drei Auflagetischen 12, 14 und 16 angeordnete Anlageeinrichtung 38 in Form eines vorliegend beispielhaft aus zwei Segmenten 40a und 40b bestehenden und sich geradlinig erstreckenden leistenartigen Winkellineals.

Die Anlageeinrichtung 38 erstreckt sich dabei exakt orthogonal zur Sägelinie 20. Man erkennt aus Fig. 1, dass das eine Segment 40a der Anlageeinrichtung 38 vor allem seitlich vom Zuführtisch 12 und das zweite Segment 40b der Anlageeinrichtung 38 vor allem seitlich vom Entnahmetisch 16 angeordnet ist.

Die Werkstückaufteilanlage 10 umfasst eine Sensoreinrichtung 42, die vorliegend beispielhaft sechs in einer geraden Linie parallel zu der Sägelinie 20 angeordnete Sensoren 44a-f beinhaltet, die bevorzugt in den Maschinentisch 14 oberflächenbündig integriert sein können. Diese gerade Linie erstreckt sich orthogonal zu der Förderrichtung 28 und somit auch zu einer Bewegungsrichtung 46 eines in Fig. 1 im Bereich des Maschinentisches 14 und des Entnahmetisches 16 gezeichneten und in der vorliegend dargestellten Betriebssituation insgesamt in etwa rechteckigen abgetrennten Werkstücks 48. Die gerade Linie erstreckt sich somit parallel zur Sägelinie 20.

In Bewegungsrichtung 46 des abgetrennten Werkstücks 48 gesehen weist dieses vorliegend beispielhaft einen möglichst geradlinigen vorderen Rand 50a und einen möglichst geradlinigen hinteren Rand 50b auf. Das abgetrennte Werkstück 48 wurde mittels des Sägewagens 22 und der dort vorhandenen Sägen durch einen Schnitt längs zur Sägelinie 20 von einem Ausgangswerkstück 51 abgetrennt, welches in Fig. 1 von den Spannzangen 30 noch gehalten und auf dem Zuführtisch 12 befindlich gezeichnet ist. Das Ausgangswerkstück 51 wird hier und nachfolgend auch als erstes Werkstück 51 bezeichnet, wohingegen das abgetrennte Werkstück 48 hier und nachfolgend auch als zweites Werkstück 48 bezeichnet werden wird. Es versteht sich, dass das zweite Werkstück 48 noch weiter aufgeteilt werden kann. Es wird dann gemäß der hier verwendeten Nomenklatur zu einem ersten Werkstück.

Die Sensoren 44a-f sind so ausgebildet, dass sich die Zustände ihrer Signale ändern, wenn sich der vordere Rand 50a und der hintere Rand 50b an ihnen vorbei, vorliegend nämlich über sie hinweg bewegt. Zu diesem Zweck sind die Sensoren 44a bis 44f bevorzugt in den Maschinentisch 14, auf dem das zweite Werkstück 48 liegt, integriert, und zwar unmittelbar benachbart zur Sägelinie 20. Dabei sind die Sensoren 44a-f in Förderrichtung 28 bzw. Bewegungsrichtung 46 gesehen zwischen der Sägelinie 20 und dem Entnahmetisch 16 angeordnet. Alternativ können die Sensoren 44a bis 44f auch an einem Gehäuse des Druckbalkens oder an einem separaten Portal angeordnet sein, welches sich parallel zur Sägelinie 20 über den Maschinentisch 14 oder den Entnahmetisch 16 erstreckt.

Bei den Sensoren 44a-f handelt es sich vorliegend beispielhaft um Infrarotsensoren ähnlich zu jenen, die in PC-Mäusen verwendet werden und die vorliegend in der Art einer Lichtschranke eingesetzt werden und die vorliegend wegen ihrer Funktion auch als "Kantenerfassungssensoren" bezeichnet werden können. Diese Sensoren setzen zur Erkennung eines Rands eine Relativbewegung zwischen Werkstück und Sensor voraus.

Grundsätzlich sind aber auch andere Sensoren möglich, beispielsweise akustische Sensoren, berührend arbeitende Tastsensoren, induktive Sensoren oder eine Bildverarbeitungseinrichtung in Form einer Kamera, wobei auch Kombinationen der oben erwähnten Sensoren möglich sind. Die Sensoren können eine Reinigungseinrichtung z.B. in Form einer Abblasdüse beinhalten, mit der beispielsweise im Betrieb entstehender Staub entfernt und so die Funktionsfähigkeit der Sensoren sichergestellt werden kann.

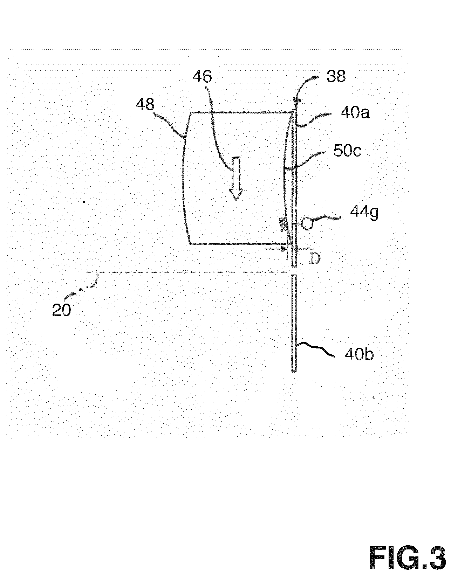

Eine weitere und bevorzugte Ausführung ist, wenn mindestens ein Sensor 44g in die Anlageeinrichtung 38 integriert ist (siehe Figur 3). Ein solcher Sensor 44g erfasst einen Abstand D zwischen der Anlageeinrichtung 38 und einem an der Anlageeinrichtung 38 anliegenden bzw. dieser zugewandten seitlichen Rand 50c des zweiten Werkstücks 48. Die Ermittlung einer Werkstückkrümmung am Rand 50c des zweiten Werkstücks 48 vor und/oder während seiner nachfolgenden Aufteilung (Quersägen) erfolgt beispielsweise nach einem Verfahren, wie es in der Offenlegungsschrift DE 10 2018 110 941 A1 beschrieben ist, aus der nachfolgend Teile inhaltlich wiedergegeben sind.

Beispielsweise kann der Abstand D zwischen dem der Anlageeinrichtung 38 zugewandten Rand 50c des zweiten Werkstücks 48 und der Anlageeinrichtung 38 bzw. dem dort vorhandenen Sensor 44g mehrmals oder auch kontinuierlich erfasst oder ermittelt werden, wobei sich das Werkstück 48 zwischen den Messungen an dem Sensor 44g in Bewegungsrichtung 46 vorbei bewegt. Auf diese Weise kann ein stückweiser oder kontinuierlicher Verlauf des Abstands D erhalten werden, der beispielsweise eine Qualifizierung der Geradheit bzw. der Krümmung des der Anlageeinrichtung 38 zugewandten Rands 50c des zweiten Werkstücks 48 gestattet. Beispielsweise kann ein Absolutwert eines Krümmungsradius des seitlichen Rands 50c ermittelt werden, und/oder ein relativer Wert des Krümmungsradius, beispielsweise relativ zu einem Grenzwert.

Konkret kann das zweite Werkstück 48 während der Erfassung des Abstandes D zwischen dem der Anlageeinrichtung 38 zugewandten Rand 50c und dem mindestens einen Sensor 44g im Winkellineal 38 relativ zu dem Sensor 44g bewegt werden. Diese Bewegung parallel zur Bewegungsrichtung 46 kann beispielsweise mittels des Programmschiebers 26 als auch mittels der Handhabungseinrichtung 32 erzeugt werden. Das zweite Werkstück 48 bewegt sich also während der Erfassung des Abstands D an dem Sensor 44g vorbei. Ist der Rand 50c gekrümmt, ändert sich der Abstand D während der Bewegung des zweiten Werkstücks 48 kontinuierlich.

Aus der Strecke, die das zweite Werkstück 48 an dem Sensor 44g im Winkellineal 38 vorbei bewegt wurde und aus dem zugehörigen Verlauf des Abstands D kann durch eine entsprechende Auswertung in der Steuer- und Regeleinrichtung 52 eine Krümmung bzw. ein Krümmungsverlauf des seitlichen Randes 50c des zweiten Werkstücks 48 ermittelt werden. Es versteht sich, dass zum Zwecke der Qualitätserfassung am zweiten Werkstück 48 bei anderen nicht gezeigten Ausführungsformen auch mehr und andere Sensoren in der Anlageeinrichtung 38 angeordnet sein können. Der Sensor 44g in der Anlageeinrichtung 38 kann ferner vorgesehen sein, ohne dass zwingend auch die Sensoren 44a-f vorhanden sind.

Eine nicht gezeigte weitere Ausführungsform kann darin bestehen, dass eine erste Gruppe von Sensoren (erste Sensoreinrichtung) in der Anlageeinrichtung 38 und eine zweite Gruppe von Sensoren (zweite Sensoreinrichtung) an der der Anlageeinrichtung 38 gegenüberliegenden Seite des Entnahmetisches 16 bevorzugt in einer zweiten Anlageeinrichtung integriert sind. Über zwei Distanzmessungen ist es damit möglich, nicht nur simultan die Werkstückkrümmung an entgegengesetzten seitlichen Rändern des zweiten Werkstücks 48 zu vermessen, sondern ortsaufgelöste (abhängig von der Anzahl der Sensoren der ersten Gruppe und der zweiten Gruppe oder mittels einer Bewegung des zweiten Werkstücks 48 parallel zur Bewegungsrichtung 46 mittels des Programmschiebers 26 oder mittels der Handhabungseinrichtung 32) Ist-Längen des abgetrennten zweiten Werkstücks 48 und deren systematische Abweichungen von der Soll-Länge des abgetrennten zweiten Werkstücks 48 zu erfassen bzw. zu ermitteln.

Die Sensoren 40a-g können ganz allgemein einen berührungslosen Sensor oder mehrere berührungslose Sensoren, insbesondere einen akustischen Sensor, beispielsweise einen Ultraschallsensor, einen optischen Sensor, beispielsweise einen Infrarotsensor, einen Lasersensor, einen Tastsensor, beispielsweise in Form eines Weggebers, einen induktiven Sensor und/oder eine Bildverarbeitungseinrichtung, beispielsweise eine Kamera, umfassen. Auch beliebige Kombinationen der genannten Typen von Sensoren sind möglich.

Zu der Werkstückbearbeitungsanlage 10 gehört auch noch eine Steuer- und Regeleinrichtung 52, bei der es sich beispielsweise um einen PC oder auch mehrere PCs handeln kann. Die Steuer- und Regeleinrichtung 52 weist einen Speicher und einen Prozessor auf, und sie erhält Signale von zahlreichen Sensoren der Werkstückbearbeitungsanlage 10, so auch von den Sensoren 44a-g. Abhängig von den Signalen der Sensoren und abhängig von einem oder von mehreren Computerprogrammen, die in der Steuer- und Regeleinrichtung 52 abgespeichert sind, steuert die Steuer-und Regeleinrichtung 52 bevorzugt verschiedene Komponenten der Werkstückbearbeitungsanlage 10 an. Zu den angesteuerten Komponenten gehören beispielsweise der Programmschieber 26 und die Spannzangen 30, der Sägewagen 22 und die auf diesem angeordneten Sägen, die Handhabungseinrichtung 32, die Etikettiereinrichtung 34 sowie die Anzeigeeinrichtung 36.

Mittels der Sensoren 44 a-f kann ein Ist-Verlauf der beiden Ränder 50a und 50b und mittels des Sensors 44g ein Ist-Verlauf des seitlichen Rands 50c am zweiten Werkstück 48 erfasst bzw. ermittelt werden. Aus einem Vergleich des Ist-Verlaufs mit einem Soll-Verlauf, der typischerweise eine ideale gerade und zum Winkellineal 38 exakt orthogonale Linie (Ränder 50a und 50b) bzw. eine zur Anlageeinrichtung exakt parallele Linie (Rand 50c) ist, kann im Einzelfall - muss aber nicht - auf das Vorhandensein von inneren mechanischen Spannungen an jener Stelle im ersten Werkstück 51 geschlossen werden, aus dem das zweite Werkstück 48 stammt. Bevorzugt wird der Ist-Verlauf des der Anlageeinrichtung 38 zugewandten seitlichen Randes 50c des zweiten Werkstücks beim Zurückziehen während oder vor der Queraufteilung durch den vorliegend beispielhaft in die Anlageeinrichtung 38 integrierten Sensor 44g zur Ermittlung einer Werkstückkrümmung erfasst, wie oben beschrieben wurde.

Auf diese Weise kann durch die sukzessive Aufteilung des ersten Werkstücks 51 in zweite Werkstücke 48 und die Beurteilung der Ränder 50a und 50b und/oder 50c an den zweiten Werkstücken 48 eine Art "geographischer Karte" einer Größe von inneren mechanischen Spannungen im ersten Werkstück 51 und/oder von zu erwartenden "Maßabweichungen" in den zweiten Werkstücken 48 erstellt werden. Dabei kann dann angenommen werden, dass diese geographische Karte der inneren mechanischen Spannungen im ersten Werkstück 51 und/oder der Bereiche im ersten Werkstück 51 mit den zugehörigen zu erwartenden Maßabweichungen im zweiten Werkstück 48 auch für andere erste Werkstücke 51 derselben Charge gilt.

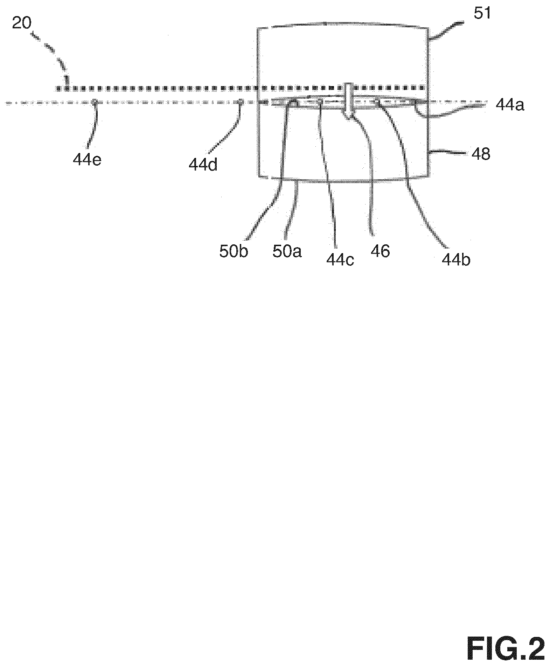

Dem liegt zugrunde, dass beispielsweise bei Spanplatten als ersten Werkstücken 51 während und nach deren Herstellung durch die Abkühlung und Trocknung innere mechanische Spannungen entstehen können, die später dazu führen können, dass sich ein aus dem ersten Werkstück 51 hergestelltes zweites Werkstück 48 nach dessen Herstellung verzieht und folglich mindestens ein Istmaß von einem entsprechenden Sollmaß abweicht (Maßabweichung). Beispielsweise können hergestellte zweite Werkstücke 48 anstelle einer gewünschten exakten Rechteckform eine sogenannte "Bananenform" aufweisen, wie dies beispielhaft in den Figuren 2 und 3 gezeigt ist.

Die Größe, welche die inneren mechanischen Spannungen und/oder die zu erwartenden Abweichungen zwischen Istmaßen und Sollmaßen charakterisiert, kann eine absolute Größe sein, sie kann aber auch nur qualitativ sein und/oder einen Ort eines Bereichs innerhalb des ersten Werkstücks 51 mit einer inneren Spannung beinhalten, die in einem bestimmten Spannungsbereich liegt, oder einen Ort eines Bereichs innerhalb des ersten Werkstücks 51 mit einem zu erwartenden Abweichungsbereich zwischen Istmaß und Sollmaß am zweiten Werkstück 48 beinhalten.

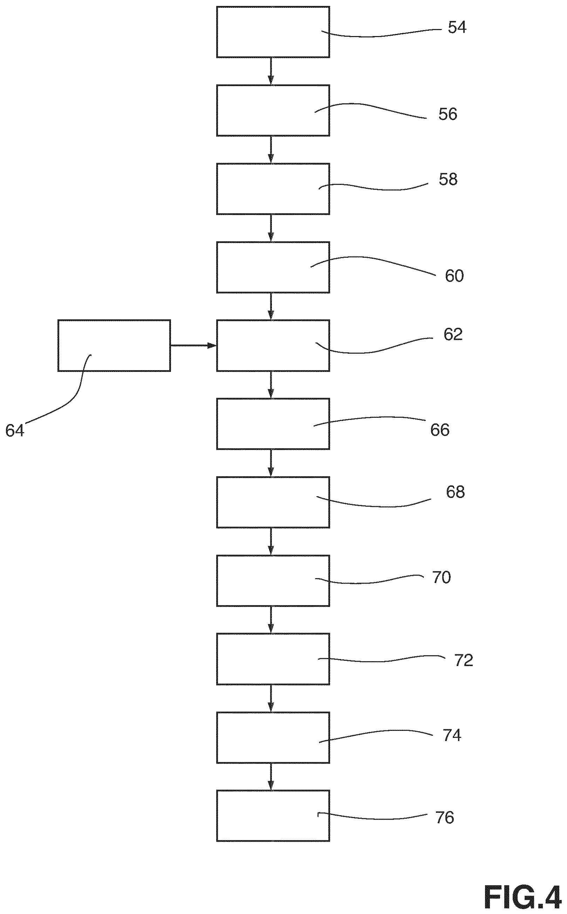

Ein solches beispielhaftes Verfahren zum Bereitstellen einer Größe, die unter der Annahme einer bestimmten Verwendung des ersten Werkstücks bei der Aufteilung eine zu erwartende Abweichung mindestens eines Istmaßes eines zweiten Werkstücks von einem entsprechenden Sollmaß charakterisiert, wird nun unter Bezugnahme auf Figur 4 erläutert:
Das Verfahren beginnt in einem Startblock 54. In einem Funktionsblock 56 wird das erste Werkstück 51 bereitgestellt, beispielsweise durch ein der Plattenaufteilanlage 10 zugeordnetes vollautomatisches Plattenlager mit entsprechenden Handhabungseinrichtungen. In einem Funktionsblock 58 wird das erste Werkstück 51 wie oben erläutert in typischerweise streifenförmige zweite Werkstücke 48 aufgeteilt. In einem Funktionsblock 60 wird mittels der Sensoren 40a-f der Verlauf und die Orientierung der Ränder 50a und 50b oder bei der bevorzugten Ausführungsvariante mit einem Sensor 44g an der Anlageeinrichtung 38 der Verlauf und die Orientierung des seitlichen Randes 50c oder beider seitlicher Ränder bei der Verwendung von zwei Anlageeinrichtungen (wie oben beschrieben) an den abgetrennten zweiten Werkstücken 48 erfasst, und der erfasste Verlauf bzw. die erfasste Orientierung werden in einem Funktionsblock 62 mit einem Soll-Verlauf und einer Soll-Orientierung verglichen. Diese werden in einem Funktionsblock 64 bereitgestellt. Bei dem Ist-Verlauf und der Ist-Orientierung handelt es sich somit jeweils um ein Istmaß und bei dem Soll-Verlauf bzw. der Soll-Orientierung jeweils um ein Sollmaß am zweiten Werkstück 48.

In einem Funktionsblock 66 werden auf der Basis der Abweichungen zwischen den Istmaßen und den Sollmaßen Größen ermittelt, die bevorzugt die in dem ersten Werkstück 51 vorhandenen inneren mechanischen Spannungen vor der Aufteilung in jenem Bereich charakterisieren, aus dem das zweite Werkstück 48 abgetrennt wurde. Beispielsweise könnte eine Abweichung einer Ist-Krümmung von einer Soll-Krümmung in eine Tabelle eingespeist werden, in der einem Wert einer jeweiligen Abweichung ein Wert für eine innere mechanische Spannung zugeordnet ist. Diese Tabelle kann beispielsweise empirisch ermittelt werden oder durch numerische Simulationen.

Anstelle eines numerischen Werts für eine innere mechanische Spannung könnte auch nur eine qualitative Zuordnung erfolgen, beispielsweise im Sinne von "klein", "mittel" und "hoch". Alternativ könnte auf die Zuordnung von inneren mechanischen Spannungen zu den ermittelten Abweichungen im Funktionsblock 66 auch verzichtet werden, und stattdessen könnten im Funktionsblock 66 auch einfach nur die ermittelten Abweichungen bereitgestellt werden, und zwar sowohl in Form von absoluten Werten oder alternativ wiederum lediglich qualitativ im Sinne von beispielsweise "klein", "mittel" und "hoch" oder "gute", "mittel" und "schlecht". Auch dies kann mithilfe einer Tabelle geschehen, in der die ermittelten absoluten Abweichungen auf die entsprechenden qualitativen Werte gemappt werden.

In einem Funktionsblock 68 wird die ermittelte Größe dem besagten Bereich im ersten Werkstück 51 zugeordnet, beispielsweise einem Randbereich. Denkbar wäre auch, dass das erste Werkstück 51 in eine Mehrzahl von durch eine Art Raster vorgegebenen Bereichen unterteilt wird, die mit Identifikatoren versehen sind, und dass auf der Basis der im Funktionsblock 66 ermittelten Abweichung bzw. den ermittelten Abweichungen einem oder mehreren der Rasterbereiche, vorzugsweise allen Rasterbereichen ein entsprechender Abweichungswert, beispielsweise die oben beschriebenen qualitativen Werte, zugeordnet wird bzw. zugeordnet werden.

Nach der vollständigen Aufteilung des ersten Werkstücks 51 kann dann in einem Funktionsblock 70 eine Art "geographische Karte" erstellt werden, welche die ermittelten Größen, die die in dem ersten Werkstück 51 vorhandenen inneren mechanischen Spannungen und/oder die an den zweiten Werkstücken 48 gemessenen und bei künftigen zweiten Werkstücken 48 zu erwartenden Abweichungen zwischen Istmaß und Sollmaß ("Maßabweichungen") charakterisieren, entsprechenden geographischen Bereichen im ersten Werkstück 51 zuordnet.

Auf der Basis des Ergebnisses des Funktionsblocks 70 wird darüber hinaus in einem Funktionsblock 72 das erste Werkstück 51 einer bestimmten Qualitätsklasse zugeordnet, und es wird für das erste Werkstück 51 und auch für die anderen ersten Werkstücke 51 derselben Charge aus den ermittelten Daten (geographische Karte, Qualitätsklasse, etc.) ein Datensatz erstellt (Funktionsblock 74), der die ermittelten Größen (erwartete Maßabweichungen, innere Spannungen, etc.), deren geographische Bereiche im ersten Werkstück 51, sowie gegebenenfalls noch weitere Informationen enthält.

Die Zuordnung zu einer bestimmten Qualitätsklasse kann beispielsweise durch die Bildung eines Mittelwerts aus den oben erwähnten absoluten oder qualitativen Werten oder mittels der Verwendung eines Maximalwerts der oben erwähnten absoluten oder qualitativen Werte vorgenommen werden. Beispielsweise könnten die Mittelwerte in drei Bereiche unterteilt werden. Dem untersten Bereich wird beispielsweise die Qualitätsklasse "hoch", dem mittleren Bereich die Qualitätsklasse "mittel" und dem oberen Bereich die Qualitätsklasse "niedrig" zugeordnet. Alternativ kann es auch eine Kombinatorik aus Mittelwerten und Spitzenwerten in Form einer Matrix geben.

Zu den weiteren Informationen können einzeln oder in Kombination gehören: Maß- und Winkelabweichungen des zweiten Werkstücks 48, Markierungen des konkaven bzw. konvexen Rand 50a/50b/50c, Materialeigenschaften, Position des zweiten Werkstücks 48 in einem Aufteilplan des ersten Werkstücks 51,
Aufteilplan, Prozessparameter (beispielsweise Schnittgeschwindigkeit, etc.), ein Code für eine Identifikation des ersten Werkstücks 51 und/oder des zweiten Werkstücks 48, die gemessene Krümmung des zweiten Werkstücks 48, eine Drehung des ersten Werkstücks 51 und/oder des zweiten Werkstücks 48 durch die Handhabungseinrichtung 32 nach der Herstellung, Messwerte der bei der Messung verwendeten Sensoren 44a-f, Materialeigenschaften, vorige Lagerbedingungen, etc.

Das Verfahren endet in einem Endblock 76.

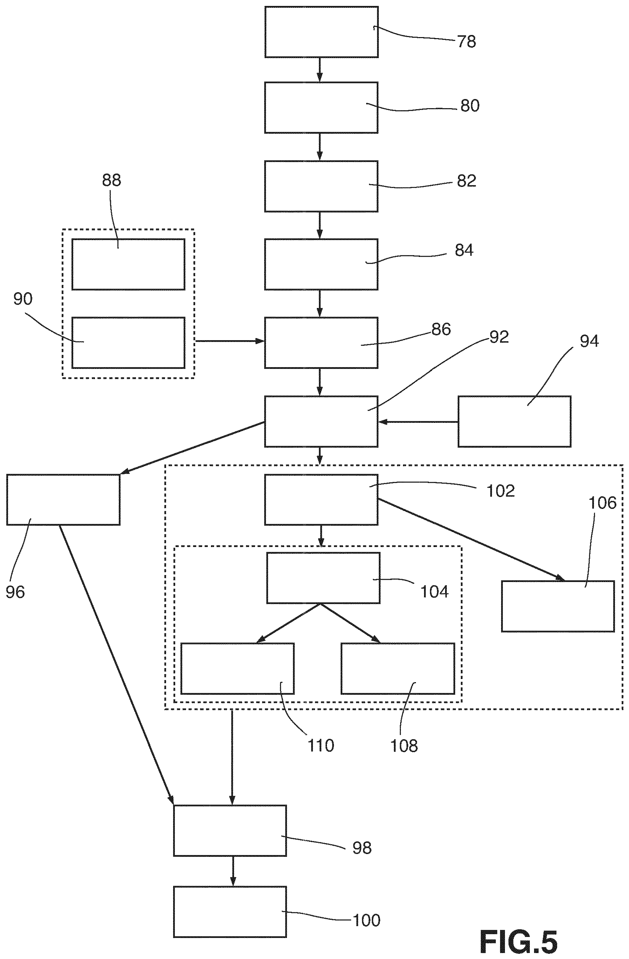

Schließlich wird nun noch unter Bezugnahme auf Figur 5 ein Verfahren erläutert, welches die Aufteilung des ersten Werkstücks 51 in aufgeteilte zweite Werkstücke 48 betrifft und die Verwendung der mit dem Verfahren gemäß Figur 4 ermittelten Größe (Maßabweichung), die eine zu erwartende Abweichung eines Istmaßes eines zweiten Werkstücks von einem entsprechenden Sollmaß charakterisiert. Auch dieses Verfahren wird vorzugsweise im Wesentlichen durch die Steuer- und Regeleinrichtung 52 ausgeführt, die hierzu über entsprechende Mittel verfügt.

Das Verfahren in Figur 5 beginnt in einem Startblock 78. In einem Funktionsblock 80 wird ein Aufteilplan für ein erstes Werkstück 51 bereitgestellt, beispielsweise von einer übergeordneten Produktionsplanungssoftware. Dieser Aufteilplan war zuvor mittels eines softwaregestützten Optimierungsverfahrens erstellt werden. Das Optimierungsverfahren kann dabei beispielsweise auf einer externen nicht zur Werkstückaufteilanlage 10 gehörenden Einrichtung wie beispielsweise einem Server oder einem PC eines Büroarbeitsplatzes automatisiert durchgeführt worden sein.

Durch den Aufteilplan wird der Ablauf der Aufteilung des ersten Werkstücks 51 vorgegeben, um die zweiten Werkstücke 48 herzustellen. Typische bekannte Optimierungskriterien für das Optimierungsverfahren sind beispielsweise eine optimale Ausnutzung des ersten Werkstücks 51, also die Minimierung von Abfall, sowie die Minimierung der für die Herstellung der zweiten Werkstücke 48 notwendigen Anzahl von Aufteilvorgängen, um die Aufteilung des ersten Werkstücks 51 in einer möglichst kurzen Zeit zur Erhöhung der Produktionskapazität der Werkstückaufteilanlage 10 durchzuführen.

Für die Ausführung des Aufteilplans wird dann in einem Funktionsblock 82 das für den Aufteilplan notwendige erste Werkstück 51 aus dem zugeordneten bevorzugt vollautomatischen Plattenlager bevorzugt mittels elektronischer übermittelter Anweisung angefordert, also ein erstes Werkstück 51 mit den zur Ausführung des Aufteilplans notwendigen Abmessungen und aus dem für die Herstellung der gewünschten zweiten Werkstücke 48 notwendigen Material. Typischerweise ist das erste Werkstück 51 eine großformatige Holz-Spanplatte, gegebenenfalls mit einer Oberflächenbeschichtung.

Das Werkstück 51 liegt zunächst zusammen mit anderen Werkstücken 51 beispielsweise in einem Bereitstellungslager oder in dem oben genannten zugeordneten bevorzugt vollautomatischen Plattenlager. Die ersten Werkstücke 51, die in dem Bereitstellungslager (in Figur 1 nicht gezeichnet) liegen, sind in einer elektronischen Lagerverwaltung bekannt. In dieser existieren zu jedem ersten Werkstück 51 entsprechende Datensätze, die das spezifische erste Werkstück 51 charakterisieren. Diese Datensätze enthalten beispielsweise die Abmessungen des ersten Werkstücks 51, das Material des ersten Werkstücks 51, den Lagerplatz, die Lagerart (beispielsweise vertikal oder senkrecht), die Lagerbedingungen, etc. Auch die Charge, aus der das erste Werkstück 51 stammt, sowie die Dauer, während der das erste Werkstück 51 gelagert war, können in dem Datensatz gespeichert sein.

Schließlich enthält der Datensatz auch Informationen zu in dem ersten Werkstück 51 angenommenen inneren Spannungen und/oder zu zu erwartenden Maßabweichungen in aus dem ersten Werkstück 51 hergestellten zweiten Werkstücken 48.

Beispielsweise kann der Datensatz eine Art geographische Karte enthalten, welche geographische Bereiche des ersten Werkstücks 51 mit bestimmten erwarteten Maßabweichungen in den hieraus hergestellten zweiten Werkstücken 48 und/oder mit bestimmten angenommenen inneren mechanischen Spannungen bezeichnet. Ferner kann zu dem Datensatz auch eine Bezeichnung einer Qualitätsklasse gehören, zu der das jeweilige erste Werkstück 51 gehört. Die Zugehörigkeit zu einer bestimmten Qualitätsklasse kann dabei zum Teil oder ausschließlich von der maximalen Höhe der in dem ersten Werkstück 51 angenommenen inneren mechanischen Spannungen und/oder den oben erwähnten erwarteten Maßabweichungen an den zweiten Werkstücken 48 zusammenhängen.

In einem optionalen Funktionsblock 84 werden nur solche erste Werkstücke 51 für die weitere Durchführung des Verfahrens zugelassen, die in dem Bereitstellungslager während einer bestimmten Mindestdauer gelagert waren. Dies hängt damit zusammen, dass im Verlaufe der Lagerung eines Werkstücks 51 in dem Bereitstellungslager durch die Herstellung des ersten Werkstücks 51 in dieses eingebrachte innere mechanische Spannungen mindestens zum Teil abgebaut werden. Eine "altes" erstes Werkstück 51, welches also eine längere Zeitdauer in dem Bereitstellungslager war, hat vermutlich insgesamt geringere innere mechanische Spannungen als ein "junges" erstes Werkstück 51, welches nur eine vergleichsweise kurze Zeitdauer in dem Bereitstellungslager war.

In einem Funktionsblock 86 werden nun konkret Informationen zu dem ausgewählten ersten Werkstück 51 bereitgestellt, und zwar in Form jener oben vielfach genannten Größe, die - unter der Annahme der Verwendung des ersten Werkstücks bei der Aufteilung - eine zu erwartende Abweichung mindestens eines Istmaßes eines zweiten Werkstücks von einem entsprechenden Sollmaß charakterisiert. Dabei versteht sich, dass die Information bzw. Größe sowohl einen absoluten physikalischen Wert in der Einheit [mm] oder [°] beinhalten kann als auch eine lediglich qualitative Klassifizierung vom Typ "hoch", "mittel" oder "niedrig". Sie kann ferner auch einen Ort eines Bereichs innerhalb des ersten Werkstücks 51 beinhalten, der durch eine bestimmte Maßabweichung bzw. einen bestimmten Bereich von Maßabweichungen bei aus dem besagten Bereich hergestellten zweiten Werkstücken 48 charakterisiert ist.

Die Größe bzw. Größen, die die zu erwartenden Maßabweichungen am zweiten Werkstück 48 charakterisieren, werden, wie oben erwähnt, aus einer Datenbank (Funktionsblock 88 für das spezifische erste Werkstück 51) abgerufen, in der ein zu dem spezifischen ersten Werkstück 51 gehörender Datensatz abgespeichert ist. Allerdings kann sich die zunächst abgespeicherte Größe im Verlauf der Lagerung des ersten Werkstücks 51 in dem Bereitstellungslager geändert haben, beispielsweise durch die Zeit der Lagerung, durch die Art der Lagerung, durch bestimmte Lagerbedingungen (Lagertemperatur, Lagerfeuchtigkeit), etc. Daher wird die Größe auf der Basis dieser Parameter in einem Funktionsblock 90 gegebenenfalls beispielsweise durch einen Korrekturkoeffizienten noch angepasst, bevor sie dann als angepasste Größe im Block 86 tatsächlich bereitgestellt wird. Ein solcher Korrekturkoeffizient kann beispielsweise durch experimentelle Untersuchungen ermittelt werden, die das Ziel haben, das hier beschriebene Verfahren zu optimieren.

Die im Funktionsblock 86 bereitgestellte Größe bzw. Größen, die die in dem ersten Werkstück 51 vorhandenen inneren Spannungen charakterisiert bzw. charakterisieren, wird nun in einen Überprüfungsblock 92 eingespeist, der darüber hinaus aus einem Funktionsblock 94 Informationen zu den Qualitätsanforderungen an die aus dem ersten Werkstück 51 herzustellenden zweiten Werkstücke 48 erhält.

Dabei können innerhalb eines Aufteilplans zweite Werkstücke 48 vorgesehen sein, die unterschiedliche Qualitätsanforderungen erfüllen müssen. Beispielsweise können die durch einen Aufteilplan aus einem ersten Werkstück 51 herzustellenden zweiten Werkstücke 48 im Rahmen der Möbelherstellung Seitenwände eines herzustellenden Möbelstücks sein, und andere zweite Werkstücke 48 innerhalb desselben Aufteilplans können Einlegeböden eines Möbelstücks sein. Die Qualitätsanforderungen an Seitenwände von Möbelstücken sind jedoch deutlich höher als die Qualitätsanforderungen an Einlegeböden, u.a. weil die Ränder der Einlegeböden in der Regel bei einem aufgebauten Möbelstück auf die Ästhetik des Möbelstücks weniger Einfluss haben bzw. weil die Abweichungen bei den Einlegeböden weniger erkennbar sind.

In dem Überprüfungsblock 92 wird nun mittels geeigneter Algorithmen geprüft, ob unter Verwendung des Aufteilplans aus dem spezifischen ersten Werkstück 51 und unter Berücksichtigung der für dieses spezifische erste Werkstück 51 zu erwartenden Maßabweichungen an den zweiten Werkstücken 48 alle zweiten Werkstücke 48 so hergestellt werden können, dass sie insbesondere im Hinblick auf die Maßgenauigkeit und die Winkelgenauigkeit die jeweils an sie gestellten Qualitätsanforderungen voraussichtlich erfüllen werden.

Hierfür kann der Datensatz aus dem Funktionsblock 74 von Figur 4 verwendet werden. Ein möglicher einfacher Algorithmus vergleicht den Datensatz 74 mit Qualitätsanforderungen, z.B. maximal zulässigen Verformungen, des zu fertigenden zweiten Werkstücks 48. Können die Qualitätsanforderungen voraussichtlich erfüllt werden, wird dies im Funktionsblock 96 festgestellt, und die Aufteilung wird wie geplant mittels des ursprünglich vorgesehenen Aufteilplans in einem Funktionsblock 98 durchgeführt. Das Verfahren endet dann in einem Funktionsblock 100.

Ergibt jedoch die Überprüfung im Überprüfungsblock 92, dass aufgrund der inneren Spannungen im ersten Werkstück 51 und/oder der zu erwartenden Maßabweichungen am zweiten Werkstück 48 nicht bei allen zweiten Werkstücken 48 die an sie gestellten jeweiligen Qualitätsanforderungen erfüllt werden können, wird in einem Funktionsblock 102 die Verwendung des ersten Werkstücks 51 angepasst. Diese Anpassung der Verwendung des ersten Werkstücks 51 kann wiederum auf ganz unterschiedliche Art und Weise erfolgen:
Beispielsweise kann in einem Funktionsblock 104 der ursprüngliche Aufteilplan durch ein Umsortieren bzw. Umplatzieren der herzustellenden zweiten Werkstücke 48 im ersten Werkstück 51 angepasst werden, oder es kann in einem Funktionsblock 106 ein alternatives erstes Werkstück 51 ausgewählt werden, dessen angenommene innere mechanische Spannungen geringer sind bzw. nach dessen Aufteilung geringere Maßabweichungen an den hieraus hergestellten zweiten Werkstücken 48 zu erwarten sind, und welches daher die Herstellung der zweiten Werkstücke 48 mit den jeweils gewünschten Qualitätsanforderungen ermöglicht.

Wird in dem Funktionsblock 104 der ursprüngliche Aufteilplan angepasst, kann dies wiederum unterschiedliche Maßnahmen beinhalten. Diese Maßnahmen können alternativ oder kumulativ erfolgen. Beispielsweise können in einem Funktionsblock 108 mittels eines geeigneten Algorithmus Umplatzierungen von zweiten Werkstücken 48 innerhalb des Aufteilplans vorgenommen werden. Gemäß einem solchen angepassten Aufteilplan werden dann zweite Werkstücke 48 mit einer ersten Qualitätsanforderung aus einem ersten Bereich des ersten Werkstücks 51 hergestellt, und zweite Werkstücke 48 mit einer zweiten Qualitätsanforderung werden aus einem zweiten Bereich des erste Werkstücks 51 hergestellt.

Die erste Qualitätsanforderung ist geringer als die zweite Qualitätsanforderung. Bei den zweiten Werkstücken 48 mit der ersten Qualitätsanforderung kann es sich somit beispielsweise um die oben erwähnten Einlegeböden handeln, wohingegen es sich bei den zweiten Werkstücken 48 mit der zweiten Qualitätsanforderung beispielsweise um die oben erwähnten Seitenwände von Möbelstücken handeln kann. In dem ersten Bereich des ersten Werkstücks 51 indiziert die Größe, die die an dem zweiten Werkstück zu erwartenden Maßabweichungen charakterisiert, höhere zu erwartende Maßabweichungen, wohingegen in dem zweiten Bereich des ersten Werkstücks 51 die besagte Größe eher geringere zu erwartende Maßabweichungen indiziert.

Im Ergebnis werden durch den angepassten Aufteilplan solche zweite Werkstücke 48, an die geringere Qualitätsanforderungen gestellt werden, gemäß Aufteilplan in Bereiche des ersten Werkstücks 51 verlegt, in denen eher hohe innere mechanische Spannungen herrschen, wohingegen solche zweite Werkstücke 48, an die höhere Qualitätsanforderungen gestellt werden, gemäß Aufteilplan in Bereiche des ersten Werkstücks 51 verlegt werden, in denen eher geringe innere mechanische Spannungen herrschen.

Alternativ oder zusätzlich zum Funktionsblock 108 kann die Anpassung des Aufteilplans gemäß Funktionsblock 104 die Anordnung zusätzlicher Spannungsfreischnitte in dem Aufteilplan beinhalten, was durch einen Funktionsblock 110 angedeutet ist. Ein solcher Spannungsfreischnitt ist eine Art Schlitz, der an einer geeigneten Stelle innerhalb des ersten Werkstücks 51 eingebracht wird und der einen mindestens teilweisen Abbau von inneren Spannungen im ersten Werkstück 51 ermöglicht, bevor dieses in zweite Werkstücke 48 aufgeteilt wird.

Allerdings kann es sein, dass durch einen solchen - gegebenenfalls zusätzlichen - Spannungsfreischnitt nicht mehr alle ursprünglich vorgesehenen zweiten Werkstücke 48 aus dem ersten Werkstück 51 hergestellt werden können. Somit kann es in diesem Fall sein, dass nachfolgende Aufteilpläne entsprechend angepasst werden müssen, um die aus dem vorliegenden Aufteilplan herausgefallenen zweiten Werkstücke 48 produzieren zu können.

Im Übrigen kann es vorkommen, dass zu einem ersten Werkstück 51, welches vom Bereitstellungslager bereitgestellt wird, keine Daten bezüglich der zu erwartenden Maßabweichungen an hieraus hergestellten zweiten Werkstücken 48 vorliegen. In diesem Fall könnte im Funktionsblock 102 der Aufteilplan so angepasst werden, dass größere als ursprünglich vorgesehene Anschnittmaße verwendet werden, also zweite Werkstücke 48 nur aus einem mittleren Bereich des ersten Werkstücks 51 hergestellt werden, in dem typischerweise die inneren Spannungen geringer sind als in den Randbereichen des ersten Werkstücks 51 und daher geringere Maßabweichungen bei aus diesem Bereich hergestellten zweiten Werkstücken zu erwarten sind.

## Patentansprüche

1. Verfahren zum Aufteilen eines ersten Werkstücks (51) in zweite Werkstücke (48), bei dem unter der Annahme einer bestimmten Verwendung des ersten Werkstücks (51) für die oder bei der Aufteilung mindestens eine Größe, die eine zu erwartende Abweichung mindestens eines Istmaßes eines zweiten Werkstücks (48) von einem entsprechenden Sollmaß charakterisiert, bereitgestellt wird, und dass die Verwendung des ersten Werkstücks (51) für die Aufteilung und/oder bei der Aufteilung oder eine Aussonderung des ersten Werkstücks (51) von der bereitgestellten Größe abhängt, **dadurch gekennzeichnet, dass** ein Aufteilplan, gemäß dem das erste Werkstück (51) aufgeteilt werden soll, abhängig von der bereitgestellten Größe überprüft und ggf. angepasst wird, und dass gemäß dem überprüften bzw. angepassten Aufteilplan ein zweites Werkstück (48) mit einer ersten Qualitätsanforderung aus einem ersten Bereich des ersten Werkstücks (51) und ein zweites Werkstück (48) mit einer zweiten Qualitätsanforderung aus einem zweiten Bereich des ersten Werkstücks (51) hergestellt wird, wobei die erste Qualitätsanforderung geringer ist als die zweite Qualitätsanforderung, und wobei bei einem aus dem ersten Bereich hergestellten zweiten Werkstück (48) eine größere Abweichung des Istmaßes vom entsprechenden Sollmaß erwartet wird als bei einem aus dem zweiten Bereich hergestellten zweiten Werkstück (48).

2. Verfahren nach Anspruch 1, **dadurch gekennzeichnet, dass** der Aufteilplan abhängig von der bereitgestellten Größe derart angepasst wird, dass der Aufteilplan mindestens einen gegebenenfalls zusätzlichen Spannungsfreischnitt enthält.

3. Verfahren nach wenigstens einem der vorhergehenden Ansprüche, **dadurch gekennzeichnet, dass** abhängig von der bereitgestellten Größe und/oder abhängig von einer Qualitätsanforderung an das zweite Werkstück (48) das erste Werkstück (51), insbesondere ein alternatives erstes Werkstück (51) mit einem anderen Wert der Größe, ausgewählt wird.

4. Verfahren nach einem der vorhergehenden Ansprüche, **dadurch gekennzeichnet, dass** die bereitgestellte Größe abhängig von mindestens einem Parameter aus der folgenden Gruppe ermittelt wird: Temperatur des ersten Werkstücks (51) während der Lagerung; Luftfeuchtigkeit der Umgebung des ersten Werkstücks (51) während der Lagerung; Dauer der Lagerung des ersten Werkstücks (51); Art der Lagerung des ersten Werkstücks (51); Lagerplatz bei der Lagerung des ersten Werkstücks (51); Materialart des ersten Werkstücks (51); Hersteller des ersten Werkstücks (51); Materialdichte des ersten Werkstücks (51); Materialdicke des ersten Werkstücks (51).

5. Verfahren nach Anspruch 4, **dadurch gekennzeichnet, dass** ein erstes Werkstück (51) nur dann für die Aufteilung verwendet wird, wenn eine Dauer der Lagerung des ersten Werkstücks (51) einen vordefinierten Grenzwert mindestens erreicht hat.

6. Verfahren nach wenigstens einem der vorhergehenden Ansprüche, **dadurch gekennzeichnet, dass** die bereitgestellte Größe bei mindestens einem vorangegangenen Aufteilprozess ermittelt und insbesondere in einer Datenbank gespeichert wurde und eine ist aus der folgenden Gruppe: Größe der Abweichung des Istmaßes von dem entsprechenden Sollmaß; Maß für die innere mechanische Spannung; Lage eines Bereichs innerhalb des ersten Werkstücks (51) mit einer erwarteten Abweichung des Istmaßes von einem Sollmaß beim zweiten Werkstück, die in einem vorbestimmten Größenbereich liegt; Lage eines Bereichs innerhalb des ersten Werkstücks (51) mit einer inneren mechanischen Spannung, die in einem vorbestimmten Spannungsbereich liegt.

7. Verfahren nach wenigstens einem der vorhergehenden Ansprüche, **dadurch gekennzeichnet, dass** dann, wenn für das erste Werkstück (51) keine Größe, die eine zu erwartende Abweichung mindestens eines Istmaßes eines zweiten Werkstücks (48) von einem entsprechenden Sollmaß charakterisiert, bereitgestellt werden kann, ein Aufteilplan derart angepasst wird, dass größere Anschnittmaße berücksichtigt werden.

8. Steuer- und/oder Regeleinrichtung (52), umfassend mindestens einen Speicher und mindestens einen Prozessor, **dadurch gekennzeichnet, dass** sie Mittel zur Ausführung eines Verfahrens nach wenigstens einem der vorhergehenden Ansprüche umfasst.

9. Werkstückaufteilanlage (10) umfassend eine Steuer-und/oder Regeleinrichtung (52) nach Anspruch 8.

10. Werkstückaufteilanlage (10) nach Anspruch 9 ferner umfassend eine Datenbank, die dazu vorgesehen und eingerichtet ist, mindestens eine bereitgestellte Größe bei mindestens einem vorangegangenen Aufteilprozess abzuspeichern und die mindestens eine Größe eine aus der folgenden Gruppe ist: Größe der Abweichung des Istmaßes von dem entsprechenden Sollmaß; Maß für die innere mechanische Spannung; Lage eines Bereichs innerhalb des ersten Werkstücks (51) mit einer erwarteten Abweichung des Istmaßes von einem Sollmaß beim zweiten Werkstück, die in einem vorbestimmten Größenbereich liegt; Lage eines Bereichs innerhalb des ersten Werkstücks (51) mit einer inneren mechanischen Spannung, die in einem vorbestimmten Spannungsbereich liegt.

## Claims

1. Method for dividing a first workpiece (51) into second workpieces (48), wherein assuming a specific use of the first workpiece (51) for or in the division, at least one variable characterizing a deviation to be expected of at least one actual measure of a second workpiece (48) from a corresponding target measure is provided, and the use of the first workpiece (51) for and/or in the division or a discarding of the first workpiece (51) depends on the provided variable, **characterized in that** a division plan according to which the first workpiece (51) is to be divided is checked depending on the provided variable and adapted if necessary, and **in that** according to the checked or adapted division plan, a second workpiece (48) with a first quality requirement is produced from a first region of the first workpiece (51) and a second workpiece (48) with a second quality requirement is produced from a second region of the first workpiece (51), wherein the first quality requirement is lower than the second quality requirement, and wherein a greater deviation of the actual measure from the corresponding target measure is expected for a second workpiece (48) produced from the first region than for a second workpiece (48) produced from the second region.

2. Method according to claim 1, **characterized in that** the division plan is adapted depending on the provided variable in such a way that the division plan contains at least one potentially additional stress relief cut.

3. Method according to at least one of the preceding claims, **characterized in that** the first workpiece (51), in particular an alternative first workpiece (51) with a different value of the variable, is selected depending on the provided variable and/or depending on a quality requirement for the second workpiece (48).

4. Method according to any of the preceding claims, **characterized in that** the provided variable is ascertained depending on at least one parameter from the following group: a temperature of the first workpiece (51) during storage; a humidity of the environment of the first workpiece (51) during storage; a duration of the storage of the first workpiece (51); a type of the storage of the first workpiece (51); a storage location during the storage of the first workpiece (51); a material type of the first workpiece (51); a manufacturer of the first workpiece (51); a material density of the first workpiece (51); and a material thickness of the first workpiece (51).

5. Method according to claim 4, **characterized in that** a first workpiece (51) is used for the division only if a duration of the storage of the first workpiece (51) has reached at least a predefined limit value.

6. Method according to at least one of the preceding claims, **characterized in that** the provided variable was ascertained in at least one previous division process and in particular was stored in a database and is a variable from the following group: a magnitude of the deviation of the actual measure from the corresponding target measure; a measure of the internal mechanical stress; a position of a region within the first workpiece (51) with an expected deviation of the actual measure from a target measure in the second workpiece which lies in a predetermined variable range; and a position of a region within the first workpiece (51) with an internal mechanical stress which lies in a predetermined stress range.

7. Method according to at least one of the preceding claims, **characterized in that** if no variable characterizing a deviation to be expected of at least one actual measure of a second workpiece (48) from a corresponding target measure can be provided for the first workpiece (51), a division plan is adapted in such a way that larger first-cut dimensions are taken into account.

8. Open- and/or closed-loop control device (52), comprising at least one memory and at least one processor, **characterized in that** it comprises means for carrying out a method according to at least one of the preceding claims.

9. Workpiece division system (10) comprising an openand/or closed-loop control device (52) according to claim 8.

10. Workpiece division system (10) according to claim 9 further comprising a database which is intended and configured to store at least one provided variable in at least one previous division process and the at least one variable is a variable from the following group: a magnitude of the deviation of the actual measure from the corresponding target measure; a measure of the internal mechanical stress; a position of a region within the first workpiece (51) with an expected deviation of the actual measure from a target measure in the second workpiece which lies in a predetermined variable range; and a position of a region within the first workpiece (51) with an internal mechanical stress which lies in a predetermined stress range.

## Revendications

1. Procédé permettant de diviser une première pièce (51) en secondes pièces (48), dans lequel, en supposant une utilisation déterminée de la première pièce (51) pour la division ou lors de celle-ci, au moins une grandeur est fournie, laquelle grandeur caractérise un écart attendu d'au moins une dimension réelle d'une seconde pièce (48) par rapport à une dimension de consigne correspondante, et en ce que l'utilisation de la première pièce (51) pour la division et/ou lors de la division ou une mise au rebut de la première pièce (51) dépend de la grandeur fournie, **caractérisé en ce qu'**un plan de division, conformément auquel la première pièce (51) doit être divisée, est vérifié et, éventuellement, adapté en fonction de la grandeur fournie, et **en ce que**, conformément au plan de division vérifié ou adapté, une seconde pièce (48) comportant une première exigence de qualité est fabriquée à partir d'une première zone de la première pièce (51) et une seconde pièce (48) comportant une seconde exigence de qualité est fabriquée à partir d'une seconde zone de la première pièce (51), dans lequel la première exigence de qualité est inférieure à la seconde exigence de qualité, et dans lequel un écart plus important de la dimension réelle par rapport à la dimension de consigne correspondante est attendu pour une seconde pièce (48) fabriquée à partir de la première zone par rapport à l'écart attendu pour une seconde pièce (48) fabriquée à partir de la seconde zone.

2. Procédé selon la revendication 1, **caractérisé en ce que** le plan de division est adapté en fonction de la grandeur fournie de telle sorte que le plan de division contient au moins une découpe de contrainte non guidée supplémentaire éventuelle.

3. Procédé selon au moins l'une des revendications précédentes, **caractérisé en ce qu'**en fonction de la grandeur fournie et/ou en fonction d'une exigence de qualité pour la seconde pièce (48), la première pièce (51), en particulier une première pièce (51) alternative comportant une autre valeur de la grandeur, est sélectionnée.

4. Procédé selon l'une des revendications précédentes, **caractérisé en ce que** la grandeur fournie est déterminée en fonction d'au moins un paramètre choisi dans le groupe suivant: température de la première pièce (51) pendant le stockage; humidité de l'environnement de la première pièce (51) pendant le stockage; durée du stockage de la première pièce (51); type de stockage de la première pièce (51); emplacement de stockage lors du stockage de la première pièce (51); type de matériau de la première pièce (51); fabricant de la première pièce (51); densité de matériau de la première pièce (51); épaisseur de matériau de la première pièce (51).

5. Procédé selon la revendication 4, **caractérisé en ce qu'**une première pièce (51) est utilisée pour la division uniquement lorsqu'une durée de stockage de la première pièce (51) a au moins atteint une valeur limite prédéfinie.

6. Procédé selon au moins l'une des revendications précédentes, **caractérisé en ce que** la grandeur fournie a été déterminée lors d'au moins un processus de division précédent et a été en particulier stockée dans une base de données et est l'une parmi le groupe suivant: grandeur de l'écart de la dimension réelle par rapport à la dimension de consigne correspondante; mesure de la contrainte mécanique interne; position d'une zone à l'intérieur de la première pièce (51) comportant un écart attendu de la dimension réelle par rapport à une dimension de consigne pour la seconde pièce qui se situe dans une plage de grandeurs prédéterminée; position d'une zone à l'intérieur de la première pièce (51) comportant une contrainte mécanique interne qui se situe dans une plage de contraintes prédéterminée.

7. Procédé selon au moins l'une des revendications précédentes, **caractérisé en ce que**, si aucune grandeur caractérisant un écart attendu d'au moins une dimension réelle d'une seconde pièce (48) par rapport à une dimension de consigne correspondante ne peut être fournie pour la première pièce (51), un plan de division est adapté de telle sorte que des dimensions de découpe plus grandes sont prises en compte.

8. Dispositif de commande et/ou de régulation (52), comprenant au moins une mémoire et au moins un processeur, **caractérisé en ce qu'**il comprend des moyens pour la mise en œuvre d'un procédé selon au moins l'une des revendications précédentes.

9. Installation de division de pièces (10) comprenant un dispositif de commande et/ou de régulation (52) selon la revendication 8.

10. Installation de division de pièces (10) selon la revendication 9, comprenant en outre une base de données qui est prévue et configurée pour stocker au moins une grandeur fournie lors d'au moins un processus de division précédent, et l'au moins une grandeur est l'une parmi le groupe suivant: grandeur de l'écart de la dimension réelle par rapport à la dimension de consigne correspondante; mesure de la contrainte mécanique interne; position d'une zone à l'intérieur de la première pièce (51) comportant un écart attendu de la dimension réelle par rapport à une dimension de consigne pour la seconde pièce qui se situe dans une plage de grandeurs prédéterminée; position d'une zone à l'intérieur de la première pièce (51) comportant une contrainte mécanique interne qui se situe dans une plage de contraintes prédéterminée.
